# EUROPEAN PATENT APPLICATION

(11) **EP 3 136 358 A1**
(43) Date of publication of application: **01.03.2017**
(21) Application number: 15783178.5
(22) Date of filing: 24.04.2015
(51) Int. Cl.: G07G 1/12, G06K 7/00, G06Q 30/04, G06Q 30/06, G07G 1/00, G06Q 30/00

(54) **PAYMENT ASSISTANCE DEVICE, PAYMENT ASSISTANCE METHOD, AND PROGRAM**

(30) Priority: 25.04.2014 JP 2014091117
(71) Applicant: Azuma, Yoshihiro, Tokyo 153-0043 (JP)
(72) Inventor: Azuma, Yoshihiro, Tokyo 153-0043 (JP)
(74) Representative: Ström & Gulliksson AB
(86) International application number: PCT/JP2015/062582
(87) International publication number: WO 2015/163460

(57) **Abstract**

The objective of the present invention is for a user (U) to be able to easily and immediately pay the price of a product without queueing at a register. In this payment assistance device (10), a product identification means (202) monitors a video, and determines whether a new product has been inserted by a user (U). When a new product has been inserted, the product identification means (202) identifies the inserted new product from the video. Next, a product price identification means (203) identifies the product price from the identified product. If new products are inserted one after another, it is determined whether the user (U) is inserting the new products, the act of identifying the identified product and product price is repeated, and a total management unit (204) computes the cumulative total of the product prices. The identified products, identified product prices, and cumulative total amount are displayed at a payment terminal (50) by means of an instruction from the total management unit (204). When predetermined conditions are satisfied, the total management unit (204) determines the total payment amount. Afterwards, a charging unit (205) requests a charging process of a charging server (30).

## Description

### TECHNICAL FIELD

The present invention relates to a payment assistance device, a payment assistance method, and a program.

### BACKGROUND ART

Conventionally, a barcode or the like is typically affixed to products in supermarkets and mass retailers. When a product price is to be paid, a store staff needs to perform an operation to read the barcode affixed to the product using the barcode reader of a payment terminal (point of sales system (POS)) installed at a payment place (at a register).
(for example, see Patent Document 1).
Patent Document 1: Japanese Unexamined Patent Application, Publication No. 2010-198137

### DISCLOSURE OF THE INVENTION

### Problems to be Solved by the Invention

Therefore, customers necessarily go to the limited number of registers, and the store staffs need to perform the operation to read the barcode, and the customers need to wait for a long time.

Therefore, the customers have a demand to easily and immediately pay the product price without waiting in line at the register. However, conventional technologies including Patent Document 1 cannot meet such a demand.

The present invention has been made in view of the foregoing, and an objective is to easily and immediately pay the product price without waiting in line at the register.

### Means for Solving the Problems

To achieve the above objective, a payment assistance device of one aspect of the present invention is a payment assistance device that assists payment by performing communication with a terminal having a function to capture a cart in which one or more products are inserted by a user and a function to instruct the payment of the one or more products inserted in the cart, the payment assistance device including:
product image acquisition means configured to acquire a video of a captured inside of the cart;
product identification means configured to identify the product when the insertion of a new product into the cart has been determined on the basis of the video;
product price identification means configured to identify the price of the product identified by the product identification means;
total management means configured to accumulate the prices identified by the product price identification means, i.e., the price of the one or more products identified by the product identification means so far, and determine the cumulative price when a predetermined condition is satisfied indicating an instruction for payment from the terminal, as the total sum of the products to be paid; and
charging control means configured to control execution of the process of charging the user with the total sum determined by the total management means.

In the payment assistance device of another aspect of the present invention,
the terminal can further have a function to present information to the user, and
user position identification means configured to identify the position of the user when a new product is inserted into the cart, and
advertisement content management means configured to control presenting predetermined advertisements on the terminal on the basis of the position identified by the user position identification means
can be further included.

In the payment assistance device of another aspect of the present invention,
a weight measurement unit that measures weights of the one or more products inserted in the cart can be provided outside the payment assistance device,
the weight of a product having the possibility of being inserted into the cart can be obtained in advance, and actual weight acquisition means configured to acquire the weights measured by the weight measurement unit as an actual weight,
product weight identification means configured to identify an addition value of the weights respectively obtained for the one or more products identified by the product identification means so far, as an estimated weight, and
error determination means configured to calculate the error between the actual weight and the estimated weight can be further included.

A payment assistance method of one aspect of the present invention is
a payment assistance method executed by a payment assistance device that assists payment by performing communication with a terminal having a function to capture a cart in which one or more products are inserted by a user and a function to instruct the payment of the one or more products inserted in the cart, the payment assistance method including:
a product image acquisition step of acquiring a video of a captured inside of the cart;
a product identification step of identifying the product when the insertion of a new product into the cart has been determined on the basis of the video;
a product price identification step of identifying the price of the product identified by the product identification step;
a total management step of accumulating the prices identified by the product price identification step, i.e., the price of the one or more products identified by the product identification step so far, and determining the cumulative price when a predetermined condition is satisfied indicating an instruction for payment from the terminal, as the total sum of the products to be paid; and
a charging control step of controlling execution of the process of charging the user with the total sum determined by the total management step.

A program of one aspect of the present invention causes a computer that executes control of assistance of payment by performing communication with a terminal having a function to capture a cart in which one or more products are inserted by a user and a function to instruct the payment of the one or more products inserted in the cart, to execute a control process including:
a product image acquisition step of acquiring a video of a captured inside of the cart;
a product identification step of identifying the product when the insertion of a new product into the cart has been determined on the basis of the video;
a product price identification step of identifying the price of the product identified by the product identification step;
a total management step of accumulating the prices identified by the product price identification step, i.e., the prices of the one or more products identified by the product identification step so far, and determining the cumulative price when a predetermined condition is satisfied indicating an instruction for payment from the terminal, as the total sum of the products to be paid; and
a charging control step of controlling execution of the process of charging the user with the total sum determined by the total management step.

### Effects of the Invention

According to the present invention, the product price can be paid without affixing a barcode or the like to the product.

### BRIEF DESCRIPTION OF THE DRAWINGS

Fig. 1 is a diagram illustrating a configuration of a payment assistance system to which a payment assistance device according to an embodiment of the present invention is applied.
Fig. 2 is a block diagram illustrating the hardware configuration of the payment assistance device of the embodiment of the present invention.
Fig. 3 is a function block diagram illustrating a functional configuration for executing a payment process, of the functional configurations of the payment assistance device of Fig. 2.
Fig. 4 is a diagram illustrating the structure of a product table stored in a product table storage unit of the storage unit of the payment assistance device of Fig. 2.
Fig. 5 is a diagram illustrating an example of the screen of a payment terminal of Fig. 1.
Fig. 6 is a diagram illustrating the structure of an advertisement table stored in an advertisement table storage unit of the storage unit of the payment assistance device of Fig. 2.
Fig. 7 is a flowchart for describing the flow of the payment process executed by the payment assistance device of Fig. 2 having the functional configuration of Fig. 3.
Fig. 8 is a flowchart for describing the flow of the advertisement display process in detail, of the payment process of Fig. 7.
Fig. 9 is a flowchart for describing the flow of an error calculation process in detail, of the payment process of Fig. 7.

### PREFERRED MODE FOR CARRYING OUT THE INVENTION

Hereinafter, embodiments of the present invention will be described with reference to the drawings.

### [Outline of Payment Management System]

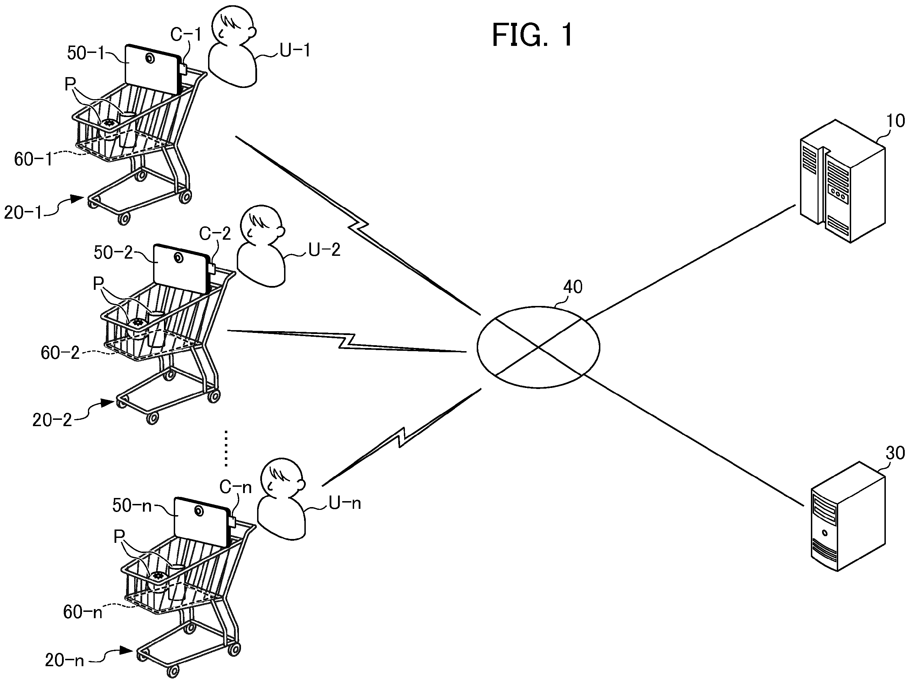

Fig. 1 illustrates the configuration of a payment assistance system to which a payment assistance device according to an embodiment of the present invention is applied. The payment assistance system illustrated in Fig. 1 is configured so that a payment assistance device 10, cart systems 20-1 to 20-n, and a charging server 30 are connected to one another through a network 40.

n (n is an arbitrary integer value of 1 or more) card media C-1 to C-n are issued by a business operator who offers a predetermined product P, for example. The n card media are configured from an integrated circuit (IC) that can perform contactless communication and a magnetic card, and are provided with a function to record and calculate information (data). Hereinafter, when it is not necessary to individually distinguish the card media C-1 to C-n, these card media are collectively simply called "card medium C". Company currency (points) usable for payment for the provision of the product P by the business operator is associated with the card medium C. Here, the "company currency is associated" does not mean that the company currency is directly stored in the card medium C, and does mean that an amount of the company currency usable by using the card medium C is managed by the payment assistance device 10. That is, the card medium C has the function of using the company currency as payment for the price of the product P of the business operator. The card medium C does not store the company currency itself, and stores only an identifier (card number) or the like for uniquely identifying itself.

n (n is an arbitrary integer value of 1 or more) cart systems 20-1 to 20-n are owned by the business operator who offers the predetermined product P, for example, and are used by users U-1 to U-n who are offered the predetermined product P. Here, the business operator is an arbitrary product provider, and can be a retail home improvement center operator, for example. In the present embodiment, the business operator is a retail supermarket operator for convenience of description. Note that, hereinafter, when it is not necessary to individually distinguish the cart systems 20-1 to 20-n, these cart systems are collectively called "cart system 20". The cart systems 20-1 to 20-n are respectively provided with payment terminals 50-1 to 50-n and weight sensors 60-1 to 60-n. When the cart systems 20-1 to 20-n are collectively called "cart system 20", the payment terminals 50-1 to 50-n are collectively called "payment terminal 50", the weight sensors 60-1 to 60-n are collectively called "weight sensor 60". The payment terminal 50 is configured as a computer provided with a processing function as a computer main body, a touch panel and some buttons as an input device, a display, speaker, and the like as a display device, and a camera and the like as a capturing device in a plate-like housing. Although not illustrated, the payment terminal 50 is provided with a reader/writer unit, a communication unit, a global positioning system (GPS) unit, and a camera unit. The reader/writer unit has a reader/writer function of the card medium C, and can read information stored on the card medium C and can write various types of information onto the card medium C by performing contact or contactless communication with the IC incorporated in the card medium C. The communication unit can perform communication for providing/receiving various types of information, using Wi-Fi, or the like, with another device (mainly the payment assistance device 10 in the example of Fig. 1) through the network 40. When the GPS unit receives GPS signals from a plurality of GPS satellites, the GPS unit calculates data indicating the current position of the payment terminal 50, to be specific, data of latitude, longitude, and altitude (these data are hereinafter collectively called "position information") on the basis of the GPS signals. For example, the GPS unit can identify the current position of the user U with the position information. The camera unit can capture a video of the product P inserted into the cart of the cart system 20, for example. The weight sensor 60 measures weights of the cart of the cart system 20 and the product P, and outputs the measured result.

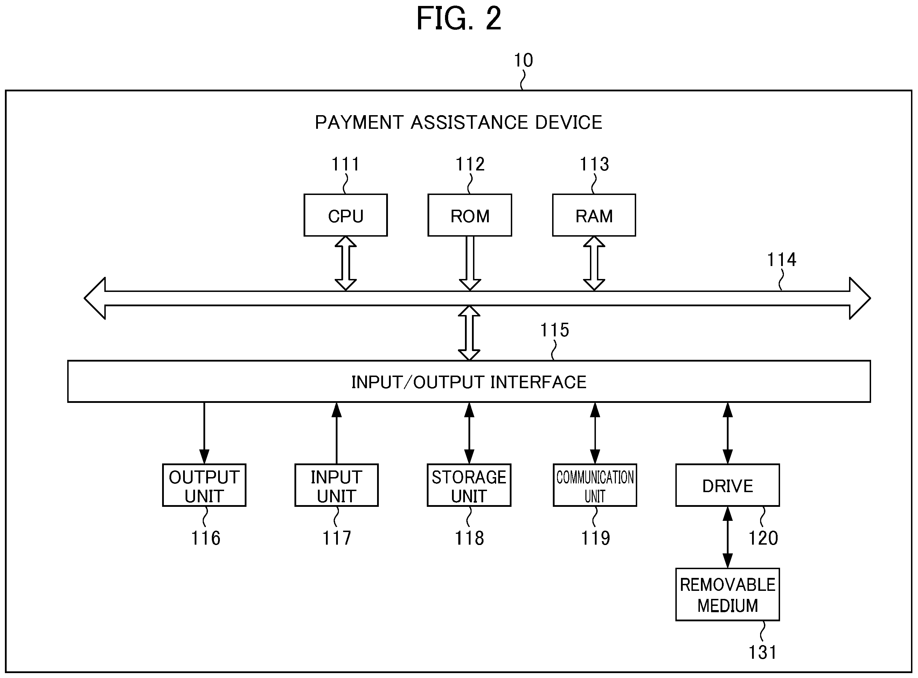

The payment assistance device 10 is configured from a server or the like managed by the same business operator or another entity, and assists payment of the price of the product P. Details of the payment assistance device 10 will be described with reference to Fig. 2 and the subsequent drawings. The charging server 30 executes the process of charging the sum of the identified products P (hereinafter, the process is called "charging process") on the basis of a request from the payment assistance device 10. The network 40 is an arbitrary network including the Internet.

An outline of the operation of such a payment assistance system is as follows. For example, the user U pushes the cart system 20, and moves in the shop. The camera unit of the payment terminal 50 captures the inside of the cart of the cart system 20, and transmits the video to the payment assistance device 10. The payment assistance device 10 monitors the video, and determines whether the product P has been inserted by the user U. Here, assume that the user U has inserted the product P into the cart of the cart system 20. The payment assistance device 10 determines that the product P has been inserted, and identifies what the inserted product P is from the video. Next, the payment assistance device 10 identifies the product price from the identified product P. In a case where the products P are inserted one after another, the payment assistance device 10 repeats the act of determining that the product P has been inserted by the user U, and identifying the inserted product P and the product price, and calculates the cumulative total of the product prices. The identified products P, the identified product prices, and the cumulative amount are displayed on the payment terminal 50 according to an instruction from the payment assistance device 10. When a predetermined condition is satisfied, the payment assistance device 10 settles the total payment amount. For example, the predetermined condition can be set to the condition that the user U presses the checkout button of the payment terminal 50.
(the checkout button will be described below). When the user U pays with the card medium C, the payment assistance device 10 requests the charging server 30 to perform the charging process. The charging server 30 charges the total amount of the products P purchased in the supermarket.

As described above, in the present embodiment, the information of the products P, the product prices, and the cumulative amount of the product prices are calculated from the video captured by the camera unit of the payment terminal 50. The user U can pay the price of the products P on the basis of the information. Therefore, the store staff no longer needs to read the barcode affixed to the product P using the barcode reader of the payment terminal (POS). As a result, the business operator can resolve the state of customers waiting for a long time at the register.

Further, in the present embodiment, for example, to accurately identify the product P, the payment assistance device 10 compares the actual weight of the product P measured by the weight sensor 60 installed in the cart system 20 with the estimated weight of the identified product P. If the measured actual weight of the product P and the estimated weight of the identified product P fall within a fixed error range, the product P has been accurately identified. Further, when an error exceeds the fixed range, a predetermined error process is executed. As described below, in the present embodiment, the product P is identified again.

Further, in the present embodiment, for example, the payment assistance device 10 identifies the position of the user U from the display position of the identified product P, and controls the display of an advertisement on the payment terminal 50 according to the position of the user U. For example, in a case where the identified product P is an orange juice product, the payment terminal 50 displays an advertisement of oranges according to the display section of the orange juice.

The payment assistance device 10 requests the charging server 30 to perform the charging process for charging the total price of the products P with the card medium C. The charging server 30 charges the total price of the products P identified in the payment assistance device 10.

The series of processes performed by the payment assistance device 10 of the operation of the system described above is hereinafter called "payment process".

### [Configuration of Payment Assistance Device 10]

Next, details of the configuration of the payment assistance device 10, of such a payment assistance system of Fig. 1, will be described. Fig. 2 is a block diagram illustrating the hardware configuration of a payment assistance device of an embodiment of the present invention.

The payment assistance device 10 is provided with a central processing unit (CPU) 111, a read only memory (ROM) 112, a random access memory (RAM) 113, a bus 114, an input/output interface 115, an output unit 116, an input unit 117, a storage unit 118, a communication unit 119, and a drive 120.

The CPU 111 executes various processes according to a program recorded on the ROM 112, or a program loaded from the storage unit 118 onto the RAM 113.

Data and the like necessary for the CPU 111 to execute the various processes are appropriately stored in the RAM 113.

The CPU 111, the ROM 112, and the RAM 113 are connected to one another through the bus 114. The input/output interface 115 is also connected to the bus 114. The output unit 116, the input unit 117, the storage unit 118, the communication unit 119, and the drive 120 are connected to the input/output interface 115.

The output unit 116 is configured from a display, a speaker, and the like, and outputs an image and a sound. The input unit 117 is configured from a keyboard, various buttons, and the like, and inputs various types of information according to instruction operations of an operator. The storage unit 118 is configured from a hard disk, a dynamic random access memory (DRAM), or the like, and stores various data. The communication unit 119 controls communication performed between the payment assistance device 10 and other devices (the payment terminal 50 and the charging server 30 in the example of Fig. 1) through the network 40 including the Internet.

A removable medium 131 made of a magnetic disk, an optical disk, a magneto-optical disk, or a semiconductor memory is appropriately mounted to the drive 120. The program read from the removable medium 131 by the drive 120 is installed to the storage unit 118, as needed. Further, the removable medium 131 can store the various data stored in the storage unit 118, similarly to the storage unit 118.

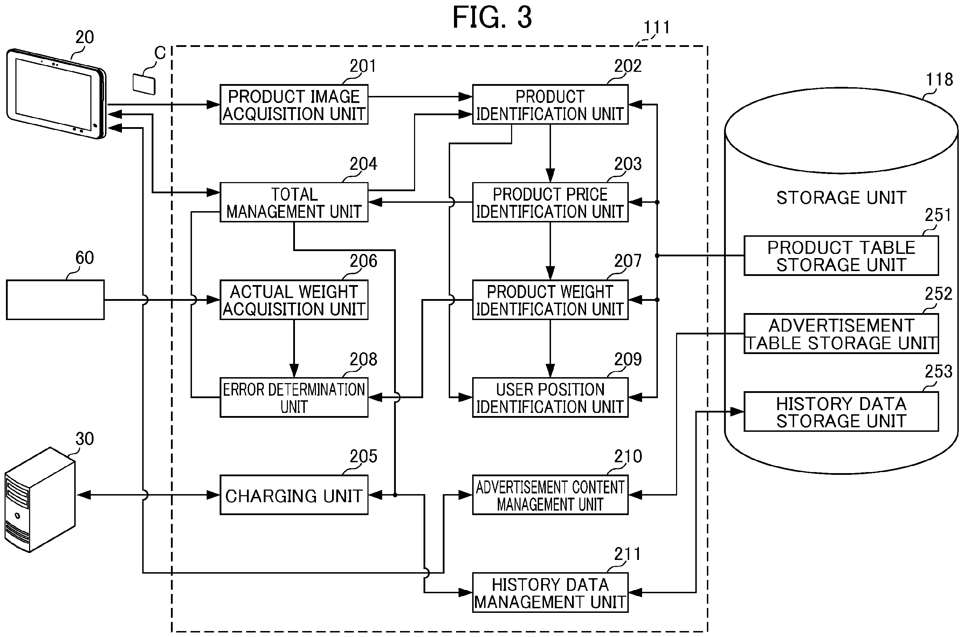

Fig. 3 is a function block diagram illustrating a functional configuration for executing such a payment process, of the functional configurations of the payment assistance device 10.

In the CPU 111, when execution of the payment process is controlled, a product image acquisition unit 201, a product identification unit 202, a product price identification unit 203, a total management unit 204, a charging unit 205, an actual weight acquisition unit 206, a product weight identification unit 207, an error determination unit 208, a user position identification unit 209, an advertisement content management unit 210, and a history data management unit 211 function. A product table storage unit 251, an advertisement table storage unit 252, and a history data storage unit 253 are provided as one area of the storage unit 118.

The product image acquisition unit 201 acquires the video of the inside of the cart of the cart system 20, the video having been captured by the camera unit installed in the payment terminal 50.

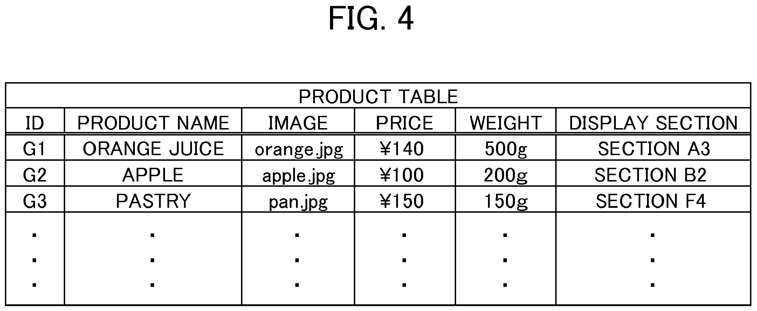

The product identification unit 202 determines whether a new product has been inserted on the basis of the video acquired by the product image acquisition unit 201. When the product identification unit 202 determines that the new product has been inserted, the product identification unit 202 identifies the new product from the video on the basis of the product table of Fig. 4 stored in the product table storage unit 251. To be specific, the product identification unit 202 identifies the new product in the video by comparing the video with a product discrimination image of the product table of Fig. 4.

Fig. 4 is a diagram illustrating an example of the structure of the product table stored in the product table storage unit 251 of the storage unit 118 of the payment assistance device 10 of Fig. 2. In the product table, a product name, a link to the product discrimination image, the product price, the product weight, and the display section are stored for each ID.

The product name refers to the name of a product. The link to the product discrimination image refers to the storage location of an image for discriminating the product. The product price refers to price given to the product. The product weight refers to the standard weight of a product measured in advance. The display section refers to the section in which the product is displayed. To be specific, regarding the ID = G1 in the product table of Fig. 4, the product name is orange juice, the product discrimination image is an image placed in the link destination, the product price is ¥140, the estimated weight of the product is 500 g, and the display section is section A3.

Referring back to Fig. 3, the product price identification unit 203 selects and identifies the price of the identified product (hereinafter, the price is referred to as "identified product price") on the basis of the ID of the identified new product (hereinafter, referred to as "identified product") in the product table of Fig. 4 stored in the product table storage unit 251. To be specific, regarding the orange juice with the ID = G1 in the product table of Fig. 4, the product price is identified as ¥140.

The total management unit 204 calculates the cumulative total of the identified product prices so far every time a new product is identified. Further, the total management unit 204 displays the identified products, the identified product prices, and the cumulative amount on the payment terminal 50.

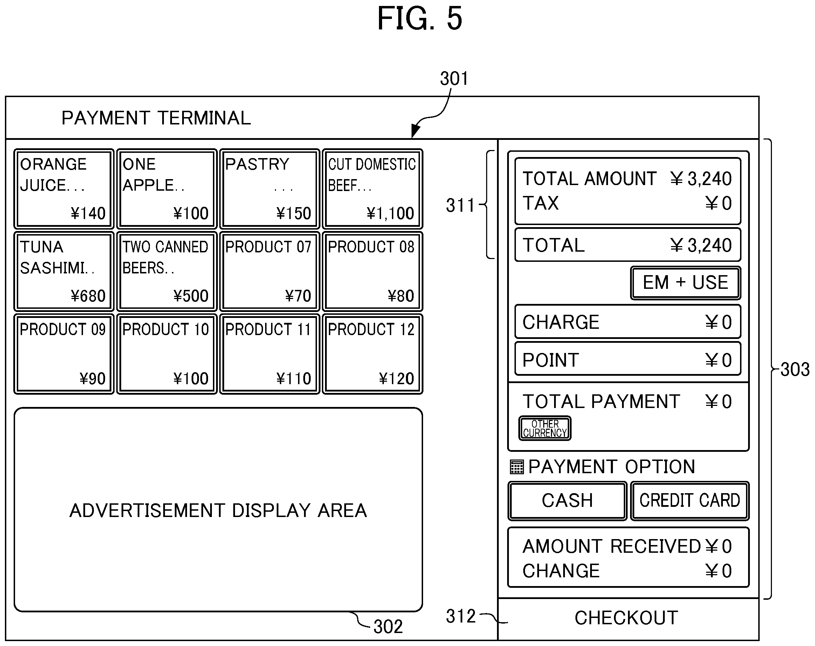

Fig. 5 illustrates an example of a state of the screen of the payment terminal 50. In the present embodiment, the payment terminal 50 is used in a shop such as a supermarket. As illustrated in Fig. 5, a product display area 301, an advertisement display area 302, and a payment amount display area 303 are provided as the screen of the payment terminal 50. The identified products and the identified product prices are displayed in the product display area 301. The advertisement based on the position information of the user U is displayed in the advertisement display area 302. The payment amount display area 303 includes a total amount display area 311 and a checkout button 312. Although a detailed description is omitted, as illustrated in Fig. 5, payment of the price of the products P with means other than the card medium C, and payment of the price of the products P with the card medium C in combination with the means other than the card medium C are available.

Further, in a case when the predetermined condition is satisfied, the total management unit 204 instructs the charging unit 205 to perform the charging process about total payment, and informs the history data management unit 211 described below of the identified products, the identified product prices, and the cumulative amount. In the present embodiment, the user U pressing the checkout button 312 in Fig. 5 is set as the predetermined condition. To be specific, assume that the ID = G2 of apple and the price thereof being ¥100 in the product table of Fig. 4 have already been identified. Afterward, when the ID = G1 of orange juice and the price thereof being ¥140 are identified as a new product, the cumulative total is calculated by adding the price of the orange juice of ¥140 to the price of the apple of ¥100, and the cumulative total of ¥240 is displayed on the payment terminal 50. At this point of time, when the user U presses the checkout button 312 in Fig. 5, the total management unit 204 instructs the charging unit 205 to perform the charging process about the total price of ¥240.

The charging unit 205 requests the charging server 30 to execute the charging process of the price when the price of the product P is paid with the predetermined card medium C.

The actual weight acquisition unit 206 acquires the actual weight of the identified product in the cart of the cart system 20, the actual weight having been measured by the weight sensor 60 installed in the cart system 20.

The product weight identification unit 207 selects and identifies the weight of the identified product on the basis of the ID of the identified product in the product table of Fig. 4 stored in the product table storage unit 251.

The error determination unit 208 calculates the error between the actual weight of the identified product acquired in the actual weight acquisition unit 206 and the estimated weight of the identified product identified in the product weight identification unit 207. To be specific, assume that, regarding the orange juice with the ID = G1 in the product table of Fig. 4, the estimated weight in the product table of Fig. 4 is 500 g and the actual weight of the orange juice measured by the weight sensor 60 is 515 g, the error is 15 g. Note that, in a case where the business operator sets 20 g as the fixed range of the error, the actual error falls below the fixed range, and thus the total management unit 204 determines that the product P has been accurately identified. Further, when the business operator sets 10 g as the fixed range of the error, the actual error exceeds the fixed range, and thus the total management unit 204 identifies the new product again in the present embodiment.

As described above, the product P can be identified with the video. To more accurately identify the product P, the accuracy of identification of the product P is secured using the weight of the product P.

The user position identification unit 209 selects and identifies the display section from the ID of the identified product on the basis of the product table Fig. 4 stored in the product table storage unit 251. To be specific, the user position identification unit 209 identifies the A3 section as the display section, regarding the orange juice with the ID = G1 in the product table of Fig. 4.

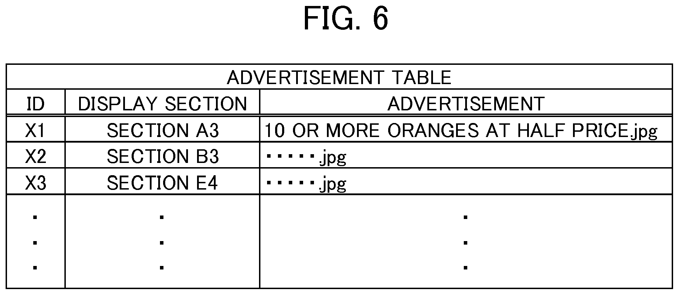

The advertisement content management unit 210 selects and identifies the advertisement on the basis of the display section in the advertisement table of Fig. 6 stored in the advertisement table storage unit 252. Fig. 6 is a diagram illustrating an example of the structure of the advertisement table stored in the advertisement table storage unit 252 of the storage unit 118 of the payment assistance device 10 of Fig. 2. In the advertisement table, a link to the display section and advertisement content is stored for each ID. Further, the advertisement content management unit 210 instructs the payment terminal 50 to display the identified advertisement on the payment terminal 50. To be specific, in a case when the display section in the advertisement table of Fig. 6 is section A3, the advertisement of 10 or more oranges at half price is displayed on the payment terminal 50. Further, the advertisement content management unit 210 acquires history data from the history data management unit 211, and instructs that the advertisement table of Fig. 6 stored in the advertisement table storage unit 252 be changed.

By displaying the advertisement on the payment terminal 50, the business operator can let the user U browse an appropriate advertisement at an appropriate time, and can enhance the user U's willingness to buy.

Referring back to Fig. 3, the history data management unit 211 transmits the history data to the advertisement content management unit 210 on the basis of the history data storage unit 253. The history data management unit 211 acquires the history data from the total management unit 204, and transmits the history data to the history data storage unit 253.

With the history data management, the advertisement can be changed to one that fits the user U's need.

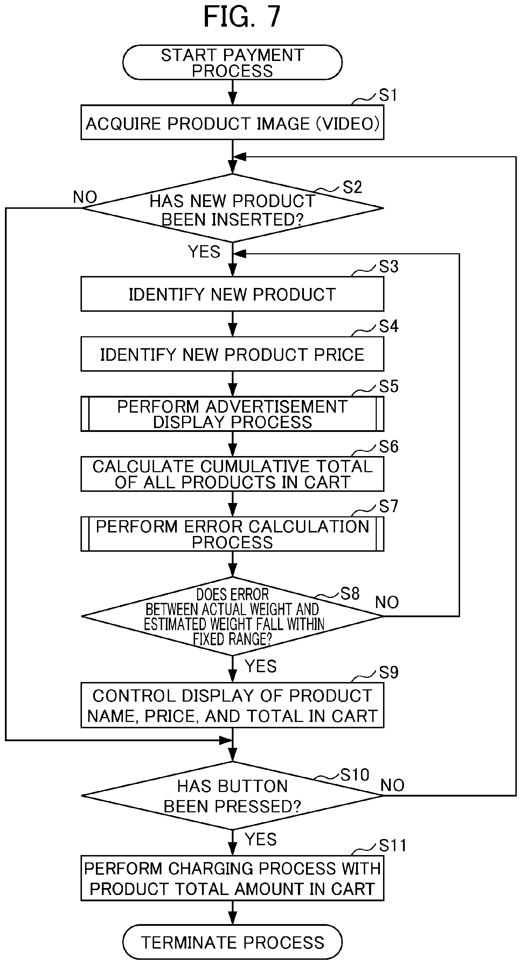

Next, the payment process executed by the payment assistance device 10 having the functional configuration of Fig. 3 will be described with reference to Fig. 7. Fig. 7 is a flowchart for describing the flow of the payment process executed by the payment assistance device 10 of Fig. 2 having the functional configuration of Fig. 3.

A series of processes as follows is executed in the payment process of Fig. 7.

In step S1 of Fig. 7, the product image acquisition unit 201 of Fig. 3 acquires the video of the inside of the cart of the cart system 20, the video having been captured by the payment terminal 50.

In step S2, the product identification unit 202 determines whether the new product has been inserted into the cart of the cart system 20 on the basis of the video acquired in step S1. When NO is determined in step S2, the process proceeds to step S10. Note that the process of step S10 and subsequent steps will be described below. In contrast, when YES is determined in step S2, the process proceeds to step S3.

In step S3, the product identification unit 202 identifies the new product inserted in the cart of the cart system 20 on the basis of the product table of Fig. 4. That is, in the above example, in a case when the new product inserted in the cart of the cart system 20 is the orange juice, the product identification unit 202 identifies that the new product is the orange juice with the ID = G1 by recognizing coincidence between the image of the orange juice inserted in the cart and the product discrimination image orange.jpg in the first row of the product table of Fig. 4.

In step S4, the product price identification unit 203 identifies the price of the identified product on the basis of the product table of Fig. 4, using the ID of the new product identified in step S3 as a key. That is, in the above example, the ID of the orange juice identified in step S3 is G1, and thus the product price identification unit 203 identifies ¥140 of the ID = G1 of the product table of Fig. 4 as the price of the new product.

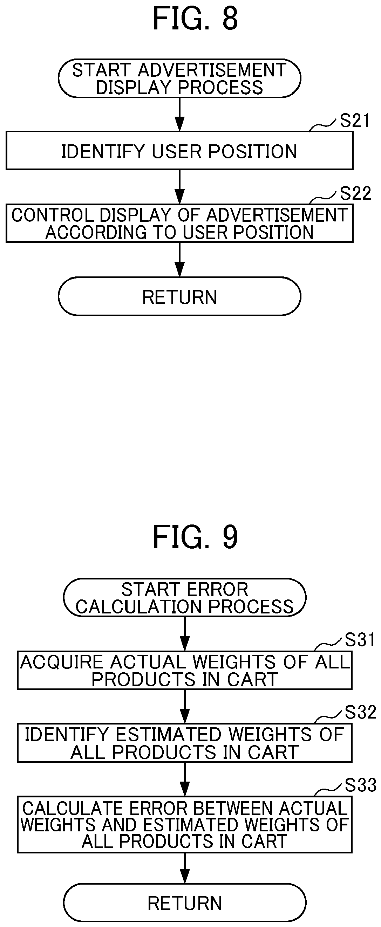

In step S5, the advertisement content management unit 210 executes the process of displaying the advertisement according to the position of the user U on the payment terminal 50. Such a process is hereinafter called "advertisement display process". The advertisement display process will be described with reference to Fig. 8.

In step S21, the user position identification unit 209 selects the display section and identifies the position of the user U on the basis of the product table of Fig. 4, using the ID of the new product identified in step S3 as a key. That is, in the above example, the ID of the orange juice identified in step S3 is G1, and thus the user position identification unit 209 identifies section A3 of the ID = G1 of the product table of Fig. 4 as the display section of the new product. In step S22, the advertisement content management unit 210 selects the advertisement on the basis of the advertisement table of Fig. 6, using the display section of the product identified in step S21 as a key. The advertisement content management unit 210 displays the selected advertisement on the payment terminal 50. That is, in the above example, the display section of the orange juice identified in step S21 is A3, and the ID is X1. Therefore, the advertisement content management unit 210 selects "10 or more oranges at half price" of the ID = X1 of the advertisement table of Fig. 4 as the advertisement, and displays the advertisement on the payment terminal 50.

Referring back to Fig. 7, in step S6, the total management unit 204 calculates the cumulative total of the products in the cart of the cart system 20 by adding the product prices identified in step S4 to the cumulative total so far, as needed. That is, in the above example, assume that apple as the product name and ¥100 as the price thereof have already been identified. Afterwards, when the orange juice as the new product and ¥140 as the price thereof are identified, the price of the orange juice of ¥140 is added to the cumulative total of ¥100 so far, and ¥240 is calculated.

In step S7, the error determination unit 208 executes the process of calculating the error between the actual weight of the identified product and the estimated weight of the identified product. Such a process is hereinafter called "error calculation process". The error calculation process will be described with reference to Fig. 9. In step S31, the actual weight acquisition unit 206 acquires the actual weight of the product in the cart of the cart system 20, the actual weight having been measured by the weight sensor 60 installed in the cart system 20. In step S32, the product weight identification unit 207 selects the product weight on the basis of the product table of Fig. 4, using the ID of the new product identified in step S3 as a key, and identifies the estimated weight of the identified product. That is, in the above example, the ID of the orange juice identified in step S3 is G1, and thus the product weight identification unit 207 identifies 500 g of the ID = G1 stored in the product table storage unit 251 as the estimated weight of the new product. In step S33, the error determination unit 208 calculates the error between the actual weight acquired in step S31 and the estimated weight identified in step S32.

Referring back to Fig. 7, in step S8, the total management unit 204 determines whether the error calculated in step S7 falls within the fixed range. When NO is determined in step S8, the process returns to step S3, and the subsequent process is executed. That is, the error calculation process of step S7 is re-executed from the identification of the new product of step S3. Such a process is repeatedly executed as a loop process from step S3 to step S8 until the error falls within the fixed range. When the error falls within the fixed range and YES is determined in step S8, the process proceeds to step S9. Note that the fixed range can be arbitrarily set by the business operator, for example. That is, in the above example, assume that the actual weight of the orange juice acquired by the actual weight acquisition unit 206 is 515 g, and the estimated weight of the orange juice identified by the product weight identification unit 207 is 500 g, the error determination unit 208 calculates the error to be 15 g. In a case when the business operator sets 10 g as the fixed range of the error, the total management unit 204 returns to step S2 because the actual error exceeds the fixed range, and the loop process from step S3 to step S8 is repeatedly executed until the error falls below 10 g. In contrast, in a case when the business operator sets 20 g as the fixed range of the error, the total management unit 204 proceeds to step S9 because the actual error falls below the fixed range.

In step S9, the total management unit 204 displays the product name in the cart of the cart system 20, the product price, and the total price on the payment terminal 50. That is, the total management unit 204 displays the orange juice as the product name identified in steps S3 and S4 and ¥140 as the product price on the product display area 301 in Fig. 5. Further, the total management unit 204 displays the total price of ¥3240 calculated in step S6 on the total amount display area 311 in Fig. 5.

In step S10, the total management unit 204 determines whether the user U has pressed the checkout button 312 in Fig. 5 in the present embodiment. When NO is determined in step S10, the process returns to step S2, and the subsequent process is executed. That is, the processes from step S2 for the determination as to whether a new product has entered to step S9 for controlling the display of the product name in the cart, the price, and the total price are re-executed. Such a process is executed repeatedly as the loop process from step S2 to step S10 until the checkout button 312 in Fig. 5 is pressed. When the user U presses the checkout button 312 in Fig. 5, and YES is determined in step S10, the process proceeds to step S11. In contrast, when YES is determined in step S10, the process proceeds to step S11.

In step S11, the total management unit 204 instructs the charging unit 205 to calculate the total of the prices of the identified products when the predetermined condition in step S10 is satisfied. The charging unit 205 that has received the instruction from the total management unit 204 controls the execution of the charging process to the charging server 30. Accordingly, the payment process is terminated.

Note that the present invention is not limited to the above-described embodiment, and modifications, improvements, and the like in the scope where the objective of the present invention can be achieved are included in the present invention.

In the above-described embodiment, the example has been given in which the user position is identified by the display position of the identified product. However, the embodiment is not limited to the example. For example, in the present invention, the GPS provided in the payment terminal 50 can identify the user position on the basis of the current position of the payment terminal 50.

Further, in the above-described embodiment, the example has been given, in which the payment assistance device 10 to which the present invention is applied is a server. However, the embodiment is not limited to the example. For example, the present invention can be applied to electronic devices. To be specific, for example, the present invention is applicable to a note-type personal computer, a television receiver, a video camera, a portable navigation device, a mobile phone device, a portable game device, and the like.

In essence, a payment assistance device to which the present invention is applied is sufficient if the device includes the following means, and its embodiment is not especially limited. That is, a payment assistance device to which the present invention is applied is
a payment assistance device that assists payment by performing communication with a terminal having a function to capture a cart in which one or more products are inserted by a user and a function to instruct the payment of the one or more products inserted in the cart, the payment assistance device including: product image acquisition means configured to acquire a video of a captured inside of the cart;
product identification means configured to identify the product when insertion of a new product into the cart has been determined on the basis of the video;
product price identification means configured to identify the price of the product identified by the product identification means;
total management means configured to accumulate the prices identified by the product price identification means, i.e., the price of the one or more products identified by the product identification means so far, and determine the cumulative price of when a predetermined condition is satisfied indicating an instruction for payment from the terminal, as the total sum of the products to be paid; and charging control means configured to control execution of the process of charging the user with the total sum determined by the total management means.

If such a payment assistance device is realized, the product price can be paid without affixing a barcode or the like to the product regardless of the embodiment.

Note that the payment assistance device to which the present invention is applied can further take various configurations as follows.

For example, the terminal further may have a function to present information to the user, and user position identification means configured to identify the position of the user of when a new product is inserted into the cart, and
advertisement content management means configured to control presenting predetermined advertisements on the terminal on the basis of the position identified by the user position identification means
may be further included. Here, a technique of identifying the position of the user is not especially limited to the technique of the above-described present embodiment, and various techniques including the above technique with GPS can be employed. Further, in a case when the GPS is employed as the technique of identifying the position of the user, the advertisement of the product displayed in the section can be presented at the stage when the user has entered a predetermined section in the shop (at a stage where no new product is especially put in the cart). That is, the advertisement is appropriate as long as it is based on the position of the user, and presenting timing and presenting content are not especially limited.

Further, for example, a weight measurement unit that measures weights of the one or more products inserted in the cart can be provided outside the payment assistance device, the weight of a product having a possibility of being inserted into the cart can be obtained in advance, and actual weight acquisition means configured to acquire the weights measured by the weight measurement unit as an actual weight,
product weight identification means configured to identify the addition value of the weights respectively obtained for the one or more products identified by the product identification means so far, as an estimated weight, and
error determination means configured to calculate the error between the actual weight and the estimated weight can be further included. Here, the weight measurement unit was the weight sensor 60 installed the cart in the above-described embodiment. However, the weight measurement unit is not especially limited thereto, and for example, the weight measurement unit may not necessarily be installed in the cart as long as it can measure the weight. Further, regarding the product having a possibility of being inserted into the cart, it is sufficient to obtain the weight thereof in advance, and the system is not limited to the system using the product table of Fig. 4 in the above embodiment.

The above-described series of processes can be executed by hardware, or can be executed by software. In other words, the functional configuration of Fig. 3 is merely an example, and is not especially limited. That is, it is sufficient as long as the function to execute the above-described series of processes as a whole is provided in the payment assistance device 10, and what type of functional blocks is used to realize the function is not especially limited to the example of Fig. 3. Further, one functional block may be configured from a single body of hardware, may be configured from a single body of software, or may be configured from a combination thereof.

In a case of executing the series of processes by the software, a program that configured the software is installed onto a computer or the like from a network or a recording medium. The computer may be a computer incorporated in special hardware. Further, the computer may be a computer that can execute various functions by having various programs installed, or a general-purpose personal computer, for example.

The recording medium including such a program is configured from not only the removable medium 131 of Fig. 2 arranged separately from the device main body for providing the program to the user U, but also a recording medium or the like provided to the user U in the state of being incorporated in the main body of the device in advance. The removable medium 131 is configured from, for example, a magnetic disk (including a floppy disk), a Blu-ray (registered trademark) Disc (Blu-ray disk), an optical disk, or a magneto-optical disk. The optical disk is configured from, for example, a compact disk-read only memory (CD-ROM) or a digital versatile disk (DVD). The magneto-optical disk is configured from a mini-disk (MD), or the like. Further, the recording medium provided to the user U in the state of being incorporated in the main body of the device in advance is configured from the ROM 112 of Fig. 2 on which the program is recorded, or a hard disk included in the storage unit 118 of Fig. 2, for example.

Note that, in the present specification, the steps describing the program recorded on the recording medium includes not only the processes performed sequentially in time, but also processes executed individually or in parallel although not necessarily processed sequentially. Further, in the present specification, the term of the system means the overall device configured from a plurality of devices, means, and the like.

### EXPLANATION OF REFERENCE NUMERALS

- 111: CPU,
- 112: ROM,
- 113: RAM,
- 114: Bus,
- 115: Input/output interface,
- 116: Output unit,
- 117: Input unit,
- 118: Storage unit,
- 119: Communication unit,
- 120: Drive,
- 131: Removable medium,
- 201: Product image acquisition unit,
- 202: Product identification unit,
- 203: Product price identification unit,
- 204: Total management unit,
- 205: Charging unit,
- 206: Actual weight acquisition unit,
- 207: Product weight identification unit,
- 208: Error determination unit,
- 209: User position identification unit,
- 210: Advertisement content management unit,
- 211: History data management unit,
- 251: Product table storage unit
- 252: Advertisement table storage unit,
- 253: History data storage unit

## Claims

1. A payment assistance device that assists payment by performing communication with a terminal having a function to capture a cart in which one or more products are inserted by a user and a function to instruct the payment of the one or more products inserted in the cart, the payment assistance device comprising:
product image acquisition means configured to acquire a video of a captured inside of the cart;
product identification means configured to identify the product when the insertion of a new product into the cart has been determined on the basis of the video,;
product price identification means configured to identify the price of the product identified by the product identification means;
total management means configured to accumulate the prices identified by the product price identification means, i.e., the price of the one or more products identified by the product identification means so far, and determine the cumulative price when a predetermined condition is satisfied indicating an instruction for payment from the terminal as the total sum of the products to be paid; and
charging control means configured to control execution of the process of charging the user with the total sum determined by the total management means.

2. The payment assistance device according to claim 1, wherein
the terminal further has a function to present information to the user, and
user position identification means configured to identify the position of the user when a new product is inserted into the cart, and
advertisement content management means configured to control presenting predetermined advertisements on the terminal on the basis of the position identified by the user position identification means
are further included.

3. A currency management device according to claim 1 or 2, wherein
a weight measurement unit that measures weights of the one or more products inserted in the cart is provided outside the payment assistance device,
the weight of a product having the possibility of being inserted into the cart is obtained in advance, and
actual weight acquisition means configured to acquire the weights measured by the weight measurement unit as an actual weight,
product weight identification means configured to identify an addition value of the weights respectively obtained for the one or more products identified by the product identification means so far, as an estimated weight, and
error determination means configured to calculate the error between the actual weight and the estimated weight are further included.

4. A payment assistance method executed by a payment assistance device that assists payment by performing communication with a terminal having a function to capture a cart in which one or more products are inserted by a user and a function to instruct the payment of the one or more products inserted in the cart, the payment assistance method comprising:
a product image acquisition step of acquiring a video of a captured inside of the cart;
a product identification step of identifying the product when the insertion of a new product into the cart has been determined on the basis of the video;
a product price identification step of identifying the price of the product identified by the product identification step;
a total management step of accumulating the prices identified by the product price identification step, i.e., the price of the one or more products identified by the product identification step so far, and determining the cumulative price when a predetermined condition is satisfied indicating an instruction for payment from the terminal, as the total sum of the products to be paid; and
a charging control step of controlling execution of the process of charging the user with the total sum determined by the total management step.

5. A program for causing a computer that executes control of assistance of payment by performing communication with a terminal having a function to capture a cart in which one or more products are inserted by a user and a function to instruct the payment of the one or more products inserted in the cart, to execute a control process comprising:
a product image acquisition step of acquiring a video of a captured inside of the cart;
a product identification step of identifying the product when the insertion of a new product into the cart has been determined on the basis of the video;
a product price identification step of identifying the price of the product identified by the product identification step;
a total management step of accumulating the prices identified by the product price identification step, i.e., the prices of the one or more products identified by the product identification step so far, and determining the cumulative price when a predetermined condition is satisfied indicating an instruction for payment from the terminal as the total sum of the products to be paid; and
a charging control step of controlling execution of the process of charging the user with the total sum determined by the total management step.
